# FASCICULE DE BREVET EUROPEEN

(11) **EP 3 048 193 B1**
(45) Date de publication et mention de la délivrance du brevet: **31.07.2019**
(21) Numéro de dépôt: 15305060.4
(22) Date de dépôt: 20.01.2015
(51) Int. Cl.: D02G 1/12, F16C 13/00, B65H 51/04

(54) **Rouleau pour dispositif d'alimentation de fil**
Walze für Fadenzuführvorrichtung
Roller for wire-feeding device

(43) Date de publication de la demande: 27.07.2016
(73) Titulaire: SUPERBA (Société par Actions Simplifiée), 68100 Mulhouse (FR)
(72) Inventeur: MASSOTTE, Philippe, 68420 GUEBERSCHWIHR (FR); MAZOYER, Michel, 68440 ZIMMERSHEIM (FR); SCARAVELLA, Daniel, 68116 GUEWENHEIM (FR); TREDAN, Baptiste, 68110 ILLZACH (FR)
(74) Mandataire: Nuss, Laurent

(56) Documents cités:
- EP-A1- 2 792 772
- WO-A1-96/13691
- DE-A1- 10 112 185
- GB-A- 1 166 372
- JP-A- H09 120 212
- US-A- 2 846 729
- US-B1- 8 046 885
- US-B2- 7 850 587

## Description

La présente invention se rapporte au domaine des mécanismes d'alimentation de fils dans un système de traitement et plus particulièrement au domaine des mécanismes d'alimentation de fils au niveau de l'arrivée d'une boîte à friser. Le document EP 2 792 772 A1 décrit un dispositif d'alimentation de boîte à friser avec rouleau d'entrée.

Actuellement, le dispositif d'alimentation en fils d'un système pour leur traitement fait intervenir notamment au moins un rouleau d'entrée et une paire de rouleaux de frisure entre lesquels le fil d'alimentation se trouve positionné. Les deux rouleaux de frisure sont montés rotatifs autour de deux axes parallèles de sorte que leurs rotations respectives soient réalisés dans des sens opposés. Les deux rouleaux de frisure sont alors pressés l'un contre l'autre, de sorte que ces rouleaux étant en contact, le fil d'alimentation se trouve guidé en déplacement selon un axe perpendiculaire aux axes de rotation de ces rouleaux.

Toutefois, dans les mécanismes d'alimentation actuels, lorsqu'un fil n'est pas correctement tendu au niveau des rouleaux de frisure et présente un noeud ou enchevêtrement du fil, la pression exercée par les rouleaux entre eux et contre le fil en déplacement peut conduire, si cette pression est trop importante, à la rupture du fil. Une telle rupture, une fois détectée, impose alors un arrêt de l'ensemble du système pour être réparée et impacte la qualité de l'ensemble de la bobine de fil traité.

Compte tenu du rythme de traitement dans les systèmes actuels, la rupture d'un fil entraine une paralysie du système qui peut rapidement être à l'origine de conséquences lourdes, tant qualitative que quantitative, au niveau de la production.

La présente invention a pour but de pallier ces inconvénients en proposant une solution qui permet de réduire considérablement, voire complètement, le risque de rupture du fil au niveau des rouleaux de frisure.

L'invention a ainsi pour objet un dispositif d'alimentation de fil selon la revendication 1. Ce dispositif d'alimentation de fil comprend au moins un rouleau, caractérisé en ce qu'il comprend au moins :
- un corps principal cylindrique formant un moyeu destiné à être entraîné en rotation au niveau de son axe de symétrie,
- une structure cylindrique périphérique formant un galet monté sur le pourtour du corps principal,
- un moyen d'entraînement en rotation de la structure cylindrique par le corps principal,
le diamètre intérieur de la structure cylindrique étant supérieur au diamètre extérieur du corps principal de façon à réaliser un espace entre la structure cylindrique et le corps principal pour autoriser un déplacement de la structure cylindrique par rapport au corps principal avec un désalignement de l'axe de rotation de la structure cylindrique par rapport à l'axe de rotation du corps principal.

L'invention sera mieux comprise, grâce à la description ci-après, qui se rapporte à un mode de réalisation préféré, donné à titre d'exemple et expliqué avec référence aux dessins schématiques annexés, dans lesquels :

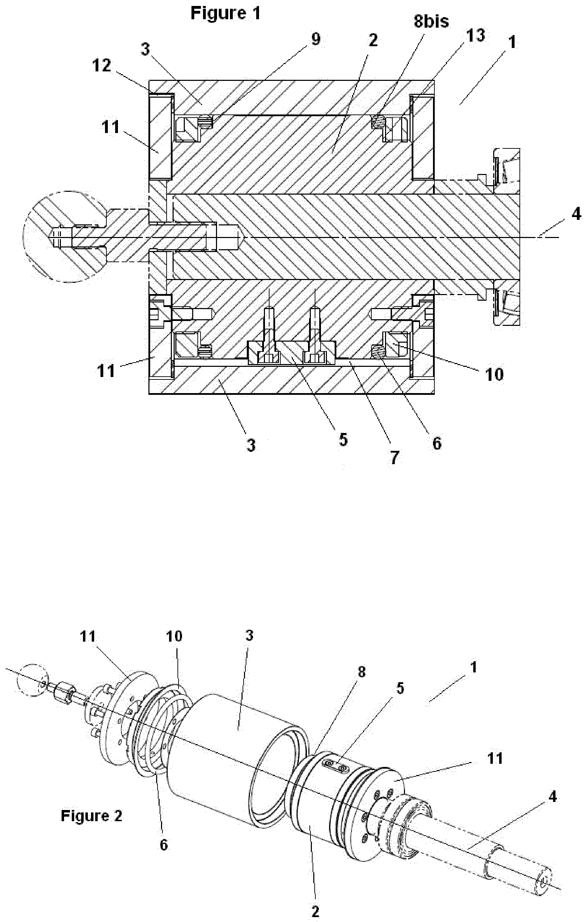

- la figure 1 est une représentation schématique d'un rouleau selon l'invention selon une section transversale passant par l'axe de rotation du rouleau,
- la figure 2 est une représentation schématique d'un rouleau selon l'invention selon une présentation éclatée du rouleau.

La présente invention porte sur un rouleau 1 pour dispositif d'alimentation de fil, caractérisé en ce qu'il comprend au moins :
- un corps principal 2 cylindrique formant un moyeu destiné à être entraîné en rotation autour de son axe 4 de symétrie,
- une structure cylindrique 3 périphérique formant un galet monté sur le pourtour du corps principal 2,
- un moyen d'entraînement 5 en rotation de la structure cylindrique 3 par le corps principal 2,
le diamètre intérieur de la structure cylindrique 3 étant supérieur au diamètre extérieur du corps principal 2 de façon à réaliser un espace 7 entre la structure cylindrique 3 et le corps principal 2 pour autoriser un déplacement de la structure cylindrique 3 par rapport au corps principal 2 avec un désalignement de l'axe de rotation de la structure cylindrique 3 par rapport à l'axe de rotation 4 du corps principal 2.

Lorsque la structure cylindrique 3 du rouleau 1 rencontre un obstacle ou une épaisseur non-prévue, cette structure cylindrique 3 se déplace.

Lorsque le rouleau qui intègre cette structure cylindrique 3 déplaçable coopère avec un second rouleau, identique ou de construction classique, comme c'est le cas pour des rouleaux de frisures, en cas d'obstacle, le déplacement de la structure cylindrique 3 par rapport au corps principal 2 se réalise avec un décalage de l'axe de rotation de la structure cylindrique 3 selon, par exemple, un écartement par rapport à l'axe de rotation du second rouleau. Ainsi, la pression exercée entre ces deux rouleaux en contact l'un contre l'autre se trouve réduite. La réduction de la pression permet alors de limiter, voire de supprimer, tout risque de rupture par écrasement d'un noeud du fil en déplacement entre les deux rouleaux.

Selon un mode de construction particulier, le rouleau 1 est caractérisé en ce que le moyen d'entraînement 5 en rotation de la structure cylindrique 3 par le corps principal 2 comprend au moins une première butée 5 positionnée sur la surface extérieure du corps principal 2 et destinée à interagir avec une seconde butée positionnée sur la face intérieure de la structure cylindrique 3.

Ainsi, le mouvement de rotation généré par le corps principal 2 est transmis à la structure cylindrique 3 au niveau d'une interaction entre deux butées, chacune de ces butées étant portée par une des deux pièces, corps principal 2 ou structure cylindrique 3. Le positionnement de ces butées permet de générer un solidarité en rotation de la structure cylindrique 3 avec le corps principal 2, tout en autorisant un déplacement de l'axe de rotation de la structure cylindrique 3 par rapport à l'axe de rotation 4 du corps principal 2. Ce déplacement peut être opéré par translation ou par inclinaison de l'axe de rotation de la structure cylindrique 3 par rapport à l'axe de rotation 4 du corps principal 2, ou encore par une combinaison de ces deux mouvements.

Selon un mode de construction préféré, les butées sont montées sur le corps principal 2 et la structure cylindrique 3 de façon à ne pas occuper l'ensemble de l'espace 7 séparant le corps principal 2 de la structure cylindrique 3. Les butées doivent pouvoir être en mesure de glisser l'une par rapport à l'autre le long d'un axe perpendiculaire aux axes de rotation du corps principal 2 et de la structure cylindrique 3 et passant par ces axes de rotation.

Selon une particularité de ce mode de construction particulier, le rouleau 1 pour dispositif d'alimentation de fil est caractérisé en ce qu'au moins une butée est réalisée par une clavette montée sur la surface correspondante. Le montage de la clavette sur une surface peut être opéré par une ou plusieurs vis qui traverse la clavette pour la fixer à la surface correspondante.

Selon un mode de construction particulier complémentaire, le rouleau 1 pour dispositif d'alimentation de fil selon l'invention est caractérisé en ce que le déplacement de la structure cylindrique 3 par rapport au corps principal 2 est contrôlé par au moins un moyen élastique 6 disposé dans l'espace 7 qui sépare ces deux pièces 2, 3. Ce moyen élastique 6, positionné dans l'espace 7, permet, selon ses propriétés de déformation, de limiter l'amplitude du déplacement des pièces 2, 3 entre elles.

Compte tenu de la possibilité pour la structure cylindrique 3 de pouvoir déplacer son axe de rotation au niveau de l'ensemble de la périphérie du corps principal 2, un mode de réalisation préféré de cette construction particulière consiste à intégrer un moyen élastique 6 de structure circulaire au rouleau 1. Toutefois, ce moyen élastique 6 peut alternativement présenter toute forme susceptible de fournir des propriétés similaires. Par exemple, une possibilité de moyens élastiques alternatifs peut consister en un positionnement d'au moins un premier élément élastique selon un premier axe de déplacement entre le corps principal 2 et la structure cylindrique 3, et d'au moins un second élément élastique selon un second axe de déplacement entre le corps principal 2 et la structure cylindrique 3, les premier et second axes de déplacement n'étant pas confondus entre eux et présentant une intersection avec l'axe de rotation 4 du corps principal 2.

Selon une autre alternative, le moyen élastique 6 et le moyen d'entraînement 5 en rotation de la structure cylindrique 3 par le corps principal 2 sont réalisés par un même élément, par exemple une pièce élastique en silicone fixée à la structure cylindrique 3 et au corps principal 2, et qui autorise cet entraînement en rotation tout en permettant un déplacement de l'axe de rotation de la structure cylindrique 3 par rapport à celui 4 du corps principal 2.

Selon une spécificité de ce mode de construction particulier, le rouleau 1 pour dispositif d'alimentation de fil selon l'invention est caractérisé en ce qu'au moins un moyen élastique 6 est disposé dans l'espace 7 qui sépare la structure cylindrique 3 du corps principal 2, au niveau d'au moins un logement 8 ouvert sur cet espace et porté par au moins une des deux pièces 2, 3.

Selon une autre spécificité complémentaire de ce mode de construction particulier, le rouleau 1 est caractérisé en ce qu'au moins un moyen élastique 6 est disposé dans l'espace 7 qui sépare la structure cylindrique 3 du corps principal 2, au niveau d'au moins un épaulement 8bis porté par une des deux pièces 2, 3 et ouvert selon une direction orientée vers un des cotés du rouleau 1 traversé par l'axe de rotation 4. Il convient de comprendre que ces cotés du rouleau traversés par l'axe de rotation 4, se rapporte à ceux qui ne participent pas à la surface radiale. Ces cotés peuvent cependant être cloisonnés par un ou plusieurs moyens adaptés en vue, par exemple, d'une protection du mécanisme du rouleau 1.

L'épaulement 8bis qui loge le moyen élastique 6 est une solution qui permet d'obtenir un arrangement d'au moins une des deux pièces que sont la structure cylindrique 3 et le corps principal 2 pour positionner le moyen élastique 6, d'une part, en contact avec l'espace 7 qui sépare la structure cylindrique 3 du corps principal 2 et, d'autre part, en contact avec une ouverture qui facilite le positionnement de ce moyen élastique lors de la construction du rouleau 1.

Selon un autre mode de construction particulier complémentaire, le rouleau 1 est caractérisé en ce qu'il comprend également un moyen de pré-serrage 10 du moyen élastique 6 afin de pouvoir générer une pré-charge de ce moyen élastique 6. En effet, la génération d'une pré-charge sur le moyen élastique 6 permet de modifier la capacité de déformation du moyen élastique 6 et donc de limiter l'amplitude de déplacement de la structure cylindrique 3 par rapport au corps principal 2.

Selon une spécificité de cette construction particulière, le rouleau 1 est caractérisé en ce que le moyen de pré-serrage 10 est réalisé par au moins une rondelle montée au niveau d'un des cotés de la structure cylindrique 3 ou du corps principal 2 traversés par l'axe de rotation 4 et arrangé pour générer un serrage axial selon un axe parallèle à l'axe de rotation 4 du rouleau 1. Ici également, les cotés de la structure cylindrique 3 ou du corps principal 2 traversés par l'axe de rotation 4 se rapportent à ceux qui ne participent pas aux surfaces radiales de ces deux pièces.

Ainsi, le montage et la construction préféré du rouleau 1 font intervenir un positionnement depuis l'extérieur d'un moyen élastique 6 puis d'un moyen de pré-serrage 10, de sorte que le moyen élastique 6 soit pris en tenaille entre le moyen de pré-serrage 10 et une surface 9 du logement 8 qui loge le moyen élastique 6.

Dans l'exemple de rouleau présenté sur les figures du présent document, le moyen élastique 6 est logé au niveau d'un premier épaulement 8bis qui présente une dimension suffisamment réduite pour que ce moyen élastique 6 déborde de ce logement 8bis au niveau d'un second épaulement 13 qui loge un moyen de pré-serrage 10. Le déplacement du moyen de pré-serrage 10 au niveau de son propre logement 13 formé par un épaulement permet ainsi de générer une contrainte en exerçant une pression contre le moyen élastique 6.

Selon une particularité de construction, le rouleau 1 est caractérisé en ce qu'au moins une des faces du rouleau 1 traversées par l'axe de rotation 4 est cloisonnée par un disque 11 monté sur le corps principal 2 et comportant un bord périphérique en regard de la paroi intérieure de la structure cylindrique 3.

Selon une spécificité de cette particularité de construction, le rouleau 1 est caractérisé en ce que la structure cylindrique 3 est indépendante en déplacement de son axe de rotation par rapport au disque de cloisonnement 11 et ne réalise aucun contact direct avec ce disque de cloisonnement 11. Un tel arrangement autorise ainsi une modification de l'axe de rotation de la structure cylindrique 3 par rapport au corps principal 2 sans que cette structure cylindrique ne se trouve gênée dans son fonctionnement par un disque de cloisonnement 11.

Selon une autre spécificité complémentaire, le rouleau 1 est caractérisé en ce que la structure cylindrique 3 comporte un épaulement 12 au niveau de sa face interne destiné à permettre le positionnement du bord périphérique d'un disque de cloisonnement 11. Un tel arrangement permet de réaliser une structure cylindrique 3 qui se trouve en permanence en contact avec le fil en déplacement. Cet arrangement évite ainsi que le fil interagisse avec la périphérie d'un des disques de cloisonnement 11.

Bien que, les exemples illustrés par les figures du présent document montrent un montage du rouleau 1 dans lequel le moyen de pré-serrage 10 du moyen élastique 6 est réglé préalablement au montage des disques de cloisonnement 11 dans le rouleau 1, il peut être envisagé un mécanisme de réglage du moyen de pré-serrage 10 sans qu'il soit nécessaire d'opérer un démontage des disques de cloisonnement 11 pour accéder aux moyens de pré-serrage 10.

Selon un mode de construction qui n'est pas limitatif de l'invention, le rouleau 1 est caractérisé en ce que le corps principal 2, la structure cylindrique 3 et/ou au moins deux moyens élastiques 6, et/ou au moins deux moyens de pré-serrage 10 et/ou au moins deux disques de cloisonnement 11 sont montés de façon symétrique de part et d'autre d'un plan perpendiculaire à l'axe de rotation 4 du rouleau 1.

Selon une spécificité de construction du dispositif d'alimentation, le rouleau selon l'invention est intégré au niveau d'un rouleau de frisure en amont d'une boîte à friser. Aussi, le rouleau sur l'invention peut être utilisé pour un dispositif d'alimentation de fil dans une boîte à friser.

## Revendications

1. Dispositif d'alimentation de fil comprenant au moins un rouleau (1), **caractérisé en ce qu'**il comprend au moins :
- un corps principal (2) cylindrique formant un moyeu destiné à être entraîné en rotation autour de son axe (4) de symétrie,
- une structure cylindrique (3) périphérique formant un galet monté sur le pourtour du corps principal (2),
- un moyen d'entraînement (5) en rotation de la structure cylindrique (3) par le corps principal (2),
le diamètre intérieur de la structure cylindrique (3) étant supérieur au diamètre extérieur du corps principal (2) de façon à réaliser un espace entre la structure cylindrique (3) et le corps principal (2) pour autoriser un déplacement de la structure cylindrique (3) par rapport au corps principal (2) avec un désalignement de l'axe de rotation de la structure cylindrique (3) par rapport à l'axe de rotation (4) du corps principal (2).

2. Dispositif d'alimentation de fil selon la revendication 1, **caractérisé en ce que** le moyen d'entraînement (5) en rotation de la structure cylindrique (3) par le corps principal (2) comprend au moins une première butée (5) positionnée sur la surface extérieure du corps principal (2) et destinée à interagir avec une seconde butée positionnée sur la face intérieure de la structure cylindrique (3).

3. Dispositif d'alimentation de fil selon la revendication 2, **caractérisé en ce qu'**au moins une butée (5) est réalisée par une clavette montée sur la surface correspondante.

4. Dispositif d'alimentation de fil selon une des revendications précédentes, **caractérisé en ce que** le déplacement de la structure cylindrique (3) par rapport au corps principal (2) est contrôlé par au moins un moyen élastique (6) disposé dans l'espace (7) qui sépare ces deux pièces (2, 3).

5. Dispositif d'alimentation de fil selon la revendication 4, **caractérisé en ce qu'**au moins un moyen élastique (6) est disposé dans l'espace (7) qui sépare la structure cylindrique (3) du corps principal (2), au niveau d'au moins un logement (8) ouvert sur cet espace (7) et porté par au moins une des deux pièces (2, 3).

6. Dispositif d'alimentation de fil selon une des revendications 4 ou 5, **caractérisé en ce qu'**au moins un moyen élastique (6) est disposé dans l'espace (7) qui sépare la structure cylindrique du corps principal, au niveau d'au moins un épaulement (8bis) porté par une des deux pièces (2, 3) et ouvert selon une direction orientée vers un des cotés du rouleau (1) traversé par l'axe de rotation (4).

7. Dispositif d'alimentation de fil selon une des revendications 4 à 6, **caractérisé en ce qu'**il comprend également un moyen de pré-serrage (10) du moyen élastique (6) afin de pouvoir générer une pré-charge de ce moyen élastique (6).

8. Dispositif d'alimentation de fil selon la revendication 7, **caractérisé en ce que** le moyen de pré-serrage (10) est réalisé par au moins une rondelle montée au niveau d'un des cotés de la structure cylindrique (3) ou du corps principal (2) traversé par l'axe de rotation (4) et arrangé pour générer un serrage axial selon un axe parallèle à l'axe de rotation du rouleau (1).

9. Dispositif d'alimentation de fil selon une des revendications précédentes, **caractérisé en ce qu'**au moins une des faces du rouleau 1 traversées par l'axe de rotation (4) est cloisonnée par un disque (11) monté sur le corps principal (2) et comportant un bord périphérique en regard de la paroi intérieure de la structure cylindrique (3).

10. Dispositif d'alimentation de fil selon la revendication 9, **caractérisé en ce que** la structure cylindrique (3) est indépendante en déplacement de son axe de rotation par rapport au disque de cloisonnement (11) et ne réalise aucun contact direct avec ce disque de cloisonnement (11).

11. Dispositif d'alimentation de fil selon une des revendications 9 ou 10, **caractérisé en ce que** la structure cylindrique (3) comporte un épaulement (12) au niveau de sa face interne destiné à permettre le positionnement du bord périphérique d'un disque de cloisonnement (11).

12. Dispositif d'alimentation de fil selon une des revendications 1 à 11, **caractérisé en ce que** le corps principal (2), la structure cylindrique (3) et/ou au moins deux moyens élastiques (6), et/ou au moins deux moyens de pré-serrage (10) et/ou au moins deux disques de cloisonnement (11) sont montés de façon symétrique de part et d'autre d'un plan perpendiculaire à l'axe de rotation du rouleau (1).

13. Dispositif d'alimentation de fil selon une des revendications 1 à 12, **caractérisé en ce que** le rouleau (1) concerne un rouleau de frisure.

## Patentansprüche

1. Fadenzuführvorrichtung, mindestens eine Walze (1) umfassend, **dadurch gekennzeichnet, dass** sie mindestens umfasst:
- einen zylindrischen Hauptkörper (2), der eine Nabe bildet und dazu bestimmt ist, um seine Symmetrieachse (4) in Rotation versetzt zu werden,
- eine periphere zylindrische Struktur (3), die eine Rolle bildet, die auf der Umfangsfläche des Hauptkörpers (2) montiert ist,
- ein Mittel (5) zum Versetzen der zylindrischen Struktur (3) in Rotation durch den Hauptkörper (2),
wobei der Innendurchmesser der zylindrischen Struktur (3) größer ist, als der Außendurchmesser des Hauptkörpers (2), derart dass ein Zwischenraum zwischen der zylindrischen Struktur (3) und dem Hauptkörper (2) geschaffen wird, um eine Verschiebung der zylindrischen Struktur (3) relativ zum Hauptkörper (2) mit Versatz der Rotationsachse der zylindrischen Struktur (3) gegenüber der Rotationsachse (4) des Hauptkörpers (2) zuzulassen.

2. Fadenzuführvorrichtung nach Patentanspruch 1, **dadurch gekennzeichnet, dass** das Mittel (5) zum Versetzen der zylindrischen Struktur (3) in Rotation durch den Hauptkörper (2) mindestens einen ersten Anschlag (5) aufweist, der auf der Außenfläche des Hauptkörpers (2) angeordnet und dazu bestimmt ist, mit einem zweiten Anschlag zusammenzuwirken, der auf der Innenfläche der zylindrischen Struktur (3) angeordnet ist.

3. Fadenzuführvorrichtung nach Patentanspruch 2, **dadurch gekennzeichnet, dass** mindestens ein Anschlag (5) als Keil ausgeführt ist, der auf der entsprechenden Oberfläche montiert ist.

4. Fadenzuführvorrichtung nach einem der vorangehenden Patentansprüche, **dadurch gekennzeichnet, dass** die Verschiebung der zylindrischen Struktur (3) relativ zum Hauptkörper (2) durch mindestens ein elastisches Mittel (6) gesteuert wird, das im Zwischenraum (7) angeordnet ist, der diese beiden Teile (2, 3) trennt.

5. Fadenzuführvorrichtung nach Patentanspruch 4, **dadurch gekennzeichnet, dass** mindestens ein elastisches Mittel (6) im Zwischenraum (7), der die zylindrische Struktur (3) vom Hauptkörper (2) trennt, im Bereich mindestens einer Aufnahme (8) angeordnet ist, die zu dem Zwischenraum (7) offen ist und von mindestens einem der beiden Teile (2, 3) getragen wird.

6. Fadenzuführvorrichtung nach einem der Patentansprüche 4 oder 5, **dadurch gekennzeichnet, dass** mindestens ein elastisches Mittel (6) im Zwischenraum (7), der die zylindrische Struktur vom Hauptkörper trennt, im Bereich mindestens einer Schulter (8bis) angeordnet ist, die von einem der beiden Teile (2, 3) getragen wird und in einer Richtung offen ist, die auf eine der Seiten der Walze (1) gerichtet ist, die von der Rotationsachse (4) durchquert wird.

7. Fadenzuführvorrichtung nach irgendeinem der Patentansprüche 4 bis 6, **dadurch gekennzeichnet, dass** sie ebenfalls ein Vorspannmittel (10) für das elastische Mittel (6) umfasst, um eine Vorspannung dieses elastischen Mittels (6) erzeugen zu können.

8. Fadenzuführvorrichtung nach Patentanspruch 7, **dadurch gekennzeichnet, dass** das Vorspannmittel (10) als mindestens eine Scheibe ausgeführt ist, die im Bereich einer der Seiten der zylindrischen Struktur (3) oder des Hauptkörpers (2) montiert ist, die von der Rotationsachse (4) durchquert werden, und dafür angeordnet, eine axiale Klemmung in einer Achse zu erzeugen, die zur Rotationsachse der Walze (1) parallel ist.

9. Fadenzuführvorrichtung nach einem der vorangehenden Patentansprüche, **dadurch gekennzeichnet, dass** mindestens eine der Seiten der Walze (1), die von der Rotationsachse (4) durchquert werden, durch eine Scheibe (11) geschlossen ist, die auf dem Hauptkörper (2) montiert ist, und einen Umfangsrand aufweist, der der Innenwand der zylindrischen Struktur (3) zugewandt ist.

10. Fadenzuführvorrichtung nach Patentanspruch 9, **dadurch gekennzeichnet, dass** die zylindrische Struktur (3) für Verschiebungen ihrer Rotationsachse relativ zur Abschlussscheibe (11) frei ist und keinen unmittelbaren Kontakt mit dieser Abschlussscheibe (11) hat.

11. Fadenzuführvorrichtung nach einem der Patentansprüche 9 oder 10, **dadurch gekennzeichnet, dass** die zylindrische Struktur (3) im Bereich ihrer Innenseite eine Schulter (12) aufweist, die dazu bestimmt ist, die Positionierung des Umfangsrandes einer Abschlussscheibe (11) zuzulassen.

12. Fadenzuführvorrichtung nach irgendeinem der Patentansprüche 1 bis 11, **dadurch gekennzeichnet, dass** der Hauptkörper (2), die zylindrische Struktur (3) und/oder mindestens zwei elastische Mittel (6) und/oder mindestens zwei Vorspannmittel (11) symmetrisch beiderseits einer Ebene angeordnet sind, die zur Rotationsachse der Walze (1) senkrecht verläuft.

13. Fadenzuführvorrichtung nach irgendeinem der Patentansprüche 1 bis 12, **dadurch gekennzeichnet, dass** die Walze (1) eine Kräuselwalze betrifft.

## Claims

1. Wire-feed device comprising at least one roller (1), **characterised in that** it comprises at least:
- a main cylindrical body (2) forming a hub designed to be driven in rotation about its axis of symmetry (4),
- a peripheral cylindrical structure (3) forming an idler roller mounted on the perimeter of the main body (2),
- a drive means (5) for driving the cylindrical structure (3) in rotation by the main body (2),
the internal diameter of the cylindrical structure (3) being greater than the external diameter of the main body (2) so as to create a space between the cylindrical structure (3) and the main body (2) to enable a displacement of the cylindrical structure (3) relative to the main body (2) with a misalignment of the axis of rotation of the cylindrical structure (3) relative to the axis of rotation (4) of the main body (2).

2. Wire-feed device according to claim 1, **characterised in that** the drive means (5) for driving the cylindrical structure (3) in rotation by the main body (2) comprises at least one first stop (5) located on the external surface of the main body (2) and designed to interact with a second stop positioned on the internal face of the cylindrical structure (3).

3. Wire-feed device according to claim 2, **characterised in that** at least one stop (5) is in the form of a key mounted on the corresponding surface.

4. Wire-feed device according to any of the preceding claims, **characterised in that** the displacement of the cylindrical structure (3) relative to the main body (2) is controlled by at least one resilient means (6) arranged in the space (7) which separates the two parts (2, 3).

5. Wire-feed device according to claim 4, **characterised in that** at least one resilient means (6) is arranged in the space (7) which separates the cylindrical structure (3) from the main body (2), at at least one housing (8) open into the space (7) and supported by at least one of the two parts (2, 3).

6. Wire-feed device according to any of claims 4 or 5, **characterised in that** at least one resilient means (6) is arranged in the space (7) which separates the cylindrical structure from the main body, at at least one shoulder (8bis) supported by one of the two parts (2, 3) and open in a direction oriented towards one side of the roller (1) traversed by the axis of rotation (4).

7. Wire-feed device according to any of claims 4 to 6, **characterised in that** it also comprises a means (10) of pre-tensioning the resilient means (6) so as to create a preloading of the resilient means (6).

8. Wire-feed device according to claim 7, **characterised in that** the pre-tensioning means (10) is formed by at least one washer fitted onto one of the sides of the cylindrical structure (3) or the main body (2) traversed by the axis of rotation (4) and arranged to create axial tensioning on an axis parallel to the axis of rotation of the roller (1).

9. Wire-feed device according to any of the preceding claims, **characterised in that** at least one face of the roller (1) traversed by the axis of rotation (4) is partitioned off by a disk (11) mounted on the main body (2) and having a peripheral edge facing the internal wall of the cylindrical structure (3).

10. Wire-feed device according to claim 9, **characterised in that** the cylindrical structure (3) is independent in the displacement of its axis of rotation relative to the partitioning disk (11) and does not directly contact said partitioning disk (11).

11. Wire-feed device according to any of claims 9 or 10, **characterised in that** the cylindrical structure (3) comprises a shoulder (12) at its internal face designed to accommodate the peripheral edge of a partitioning disk (11).

12. Wire-feed device according to any of claims 1 to 11, **characterised in that** the main body (2), the cylindrical structure (3) and/or at least two resilient means (6), and/or at least two pre-tensioning means (10) and/or at least two partitioning disks (11) are mounted symmetrically on either side of a plane perpendicular to the axis of rotation of the roller (1).

13. Wire-feed device according to any of claims 1 to 12, **characterised in that** the roller (1) is a crimping roller.
